# EUROPEAN PATENT SPECIFICATION

(11) **EP 1 647 587 B1**
(45) Date of publication and mention of the grant of the patent: **17.09.2008**
(21) Application number: 05021686.0
(22) Date of filing: 05.10.2005
(51) Int. Cl.: C09J 175/04, B01J 13/02

(54) **Laminating adhesives containing microencapsulated catalysts**
Laminierklebstoff enthaltend mikroverkapselten Katalysator
Adhesif stratifié avec catalysateur microencapsulé

(30) Priority: 12.10.2004 US 963258
(43) Date of publication of application: 19.04.2006
(73) Proprietor: Henkel AG & Co. KGaA, 40589 Düsseldorf (DE)
(72) Inventor: Ramalingam, Balasubramaniam, Cary NC 27511-6447 (US)

(56) References cited:
- US-A1- 2004 014 860
- DATABASE WPI Section Ch, Week 200420 Derwent Publications Ltd., London, GB; Class A25, AN 2004-205999 XP002362636 & JP 2003 253236 A (KOYO SANGYO CO LTD) 10 September 2003 (2003-09-10)
- DATABASE WPI Section Ch, Week 198613 Derwent Publications Ltd., London, GB; Class A81, AN 1986-085014 XP002362637 & JP 61 031482 A (DAINIPPON PRINTING CO LTD) 13 February 1986 (1986-02-13)
- DATABASE WPI Section Ch, Week 198505 Derwent Publications Ltd., London, GB; Class A25, AN 1985-028530 XP002362638 & JP 59 223774 A (NIPPON SYNTHETIC CHEM IND CO) 15 December 1984 (1984-12-15)

## Description

### Field of the Invention

The present invention provides a method of making a flexible film laminate by using a two component laminating adhesives based on polyurethanes in which at least one of the two components contains a microencapsulated catalyst capable of accelerating the formation of urethane bonds through the reaction of isocyanate groups and active hydrogen-containing groups. The two components are combined and the resulting adhesive used to laminate a thin polymeric film or foil to one or more thin polymeric films or foils, the catalyst being released from encapsulation by application of pressure.

### Background of the Invention

Laminating adhesives are widely used in the manufacture of film/foil laminates. Among many such known systems, the use of polyurethane based laminating adhesives is preferred because of their many desirable properties including good adhesion, peel strength, heat seal strength and resistance to aggressive filling goods. Typically, an isocyanate-containing polyurethane prepolymer obtained by the reaction of excess diisocyanate with a polyether and/or polyester containing two or more active hydrogen groups per molecule is used in combination with a second component. The second component usually is a polyether and/or polyester functionalized with two or more hydroxyl groups or the like per molecule. The two components are combined in a predetermined ratio and applied on one of the film or foil substrates and laminated to the second substrate. Application may be from a solution in a suitable solvent using gravure or smooth roll coating cylinders or from a solvent-free state using special application machinery.

One of the major disadvantages of a chemically curing laminating adhesive system is the time it takes for the chemical reaction to be completed when the laminate is stored at room temperature. Cure times of days to weeks in some cases is required to ensure that the laminates are ready to be processed and the intended food or other products can be safely stored in packages made from such laminates. If the contents are introduced prematurely, the laminates might not have sufficient mechanical, thermal and or chemical resistance to withstand further handling. Additionally, unreacted isocyanates or derivatives thereof (diamines, for example) may be able to migrate from the adhesive layer through the laminate and contaminate the contents of a food pouch formed from the laminate.

Several approaches have been taken to address the problem of slow cure. Storing the laminates in an elevated temperature above room temperature is a common practice to advance the chemical cure as temperature usually speeds up the reaction. Obviously, storing huge rolls of laminates requires sufficiently large storage space and keeping them at a temperature above room temperature increases production costs due to the increased energy expenditure required.

A second approach is to use radiation curing techniques to advance the chemical cure. Expensive radiation equipment and formulation modifications are necessary to use this approach. Furthermore, the final performance of such systems has not reached the level of current alternative adhesive technology.

Adding a catalyst to advance the cure is a possible approach. In most adhesive applications, however, this would be a problem to practice commercially because the addition of a catalyst reduces the effective working life of the two part polyurethane adhesives.

### Summary of the Invention:

The present invention provides a method of making a flexible film laminate, said method comprising a) combining Component A and Component B to form an adhesive mixture containing no solvents, wherein Component A comprises an isocyanate-functionalized polyurethane prepolymer and Component B comprises an active hydrogen-functionalized compound and at least one of either Component A or Component B additionally comprises a microencapsulated catalyst, wherein the catalyst encapsulated therein is capable of accelerating reaction of the isocyanate groups of the isocyanate-functionalized polyurethane prepolymer with the active hydrogen groups of the active hydrogen-functionalized a functionalized component and is at least substantially isolated from contact with the isocyanate-functionalized compound, b) joining a first flexible film and a second flexible film using the adhesive mixture interposed between the first flexible film and the second flexible film, c) applying sufficient pressure to the adhesive mixture interposed between the first flexible film and the second flexible film to release the catalyst from the microencapsulated catalyst, d) heating the laminate to 20°C to 100°C and e) curing the adhesive mixture.

A laminate may be formed by combining the two components to provide an adhesive and then using the adhesive to adhere one polymeric film or metallic foil to another polymeric film or metallic foil. The adhesive layer between the film or foil layers of the laminate is then (either simultaneously with or subsequent to lamination) subjected to pressure effective to release the catalyst from the microencapsulated catalyst, bringing the catalyst into contact with the other components of the adhesive and activating the catalyst so that it is available to increase the rate of reaction between the isocyanate groups and the active hydrogen groups.

The two component polyurethane adhesive thus can be catalyzed to advance the cure time, without significantly affect the working life of the adhesive system since the catalyst is not activated until or after the laminate layers are formed. The adhesive thus can be used in much the same way as conventional uncatalyzed two component systems, yet has the advantage of significantly shortened cure times and/or milder cure conditions (for example, the need to store the laminate at an elevated temperature for a prolonged period of time can be reduced or eliminated altogether).

### Detailed Description of Certain Embodiments of the Invention

Component A of the adhesive mixture of the present invention contains at least one compound having two or more isocyanate groups per molecule. The isocyanate groups may be free - NCO groups, but can also be blocked or masked -NCO groups. One particular embodiment of the invention employs one or more isocyanate-functionalized polyurethane prepolymers in Component A. In the context of the present invention, a polyurethane prepolymer is a compound such as results, for example, from the reaction of a polyol component (or other active hydrogen-functionalized compound) with at least one isocyanate having a functionality of at least two. This reaction can take place without solvent or in a solvent, ethyl acetate, acetone or methyl ethyl ketone, for example. The term "polyurethane prepolymer" embraces not only compounds having a relatively low molecular weight, such as are formed, for example, from the reaction of a polyol with an excess of polyisocyanate, but also oligomeric or polymeric compounds. "Perfect" polyurethane prepolymers, containing a single polyol moiety capped at each end or terminus with a polyisocyanate moiety and very little, if any, free polyisocyanate monomer or oligomeric or polymeric compounds (containing two or more polyol moieties per molecule) may also be utilized.

Molecular weight figures based on polymeric compounds refer, unless otherwise indicated, to the numerical average of the molecular weight (Mₙ). The polyurethane prepolymers used in the context of the present invention generally may have a molecular weight of from 500 to 27,000, alternatively from 700 to 15,000, or alternatively from 700 to 8,000 g/mol.
Likewise embraced by the term "polyurethane prepolymers" are compounds as formed, for example, from the reaction of a trivalent or tetravalent polyol with a molar excess of diisocyanates, based on the polyol. In this case one molecule of the resultant compound bears two or more isocyanate groups.

Polyurethane prepolymers having isocyanate end groups are well known in the art. They can be crosslinked or chain-extended with suitable curing agents - usually polyfunctional alcohols - in a simple way to form substances of higher molecular weight.

To obtain polyurethane prepolymers having terminal isocyanate groups it is customary to react polyfunctional alcohols with an excess of polyisocyanates, generally at least predominantly diisocyanates. In this case the molecular weight can be controlled at least approximately by way of the ratio of OH groups to isocyanate groups. While a ratio of OH groups to isocyanate groups of 1:1 or near to 1:1 often leads to substances with high molecular weights, it is the case with a ratio of approximately 2:1, for example, when using diisocyanates, that one diisocyanate molecule is attached on average to each OH group, so that in the course of the reaction, in the ideal case, there is no oligomerization or chain extension.

Excess unreacted polyisocyanate monomer may be removed from the polyurethane prepolymer reaction product initially obtained by any known method such as, for example, distillation to provide a prepolymer having a desirably low level of polyisocyanate monomer (e.g., less than 1 weight %).

Polyurethane prepolymers are customarily prepared by reacting at least one polyisocyanate, preferably a diisocyanate, and at least one component having functional groups which are reactive toward isocyanate groups, generally a polyol component, which is preferably composed of diols. The polyol component may contain only one polyol, although it is also possible to use a mixture of two or more polyols as the polyol component. By a polyol is meant a polyfunctional alcohol, i.e., a compound having more than one OH group in the molecule.
By "functional groups which are reactive toward isocyanate groups" are meant, in the context of the present text, functional groups which can react with isocyanate groups to form at least one covalent bond.

Suitable reactive functional groups containing active hydrogen may be monofunctional in the sense of a reaction with isocyanates: OH groups or mercapto groups, for example. Alternatively, they may also be difunctional with respect to isocyanates: amino groups, for example. A molecule containing an amino group, accordingly, also has two functional groups which are reactive toward isocyanate groups. In this context it is unnecessary for a single molecule to have two separate functional groups that are reactive toward isocyanate groups. What is critical is that the molecule is able to connect with two isocyanate groups with the formation in each case of one covalent bond.

As the polyol component is possible to use a multiplicity of polyols. These are, for example, aliphatic alcohols having from 2 to 4 OH groups per molecule. The OH groups may be both primary and secondary. Examples of suitable aliphatic alcohols include ethylene glycol, propylene glycol, butane-1,4-diol, pentane-1,5-diol, hexane-1,6-diol, heptane-1,7-diol, octane-1,8-diol and their higher homologs or isomers such as result in a formal sense from a stepwise extension of the hydrocarbon chain by one CH₂ group in each case or with the introduction of branches into the carbon chain. Likewise suitable are higher polyfunctional alcohols such as, for example, glycerol, trimethylolpropane, pentaerythritol and also oligomeric ethers of said substances with themselves or in a mixture of two or more of said ethers with one another.

As the polyol component it is additionally possible to use reaction products of low molecular weight polyfunctional alcohols with alkylene oxides, referred to as polyether polyols. The alkylene oxides have preferably 2 to 4 carbon atoms. Suitable examples are the reaction products of ethylene glycol, propylene glycol, the isomeric butanediols, hexanediols or 4,4'-dihydroxy-diphenylpropane with ethylene oxide, propylene oxide or butylene oxide, or with mixtures of two or more thereof. Also suitable, furthermore, are the reaction products of polyfunctional alcohols, such as glycerol, trimethylolethane or trimethylolpropane, pentaerythritol or sugar alcohols, or mixtures of two or more thereof, with the stated alkylene oxides to form polyether polyols. Particularly suitable polyether polyols are those having a molecular weight from about 100 to about 10,000, preferably from about 200 to about 5,000. Likewise suitable as the polyol component are polyether polyols such as are formed, for example, from the polymerization of tetrahydrofuran.

The polyethers may be synthesized using methods known to the skilled worker, by reaction of the starting compound having a reactive hydrogen atom with alkylene oxides: for example, ethylene oxide, propylene oxide, butylene oxide, styrene oxide, tetrahydrofuran or epichlorohydrin or mixtures of two or more thereof. Examples of suitable starting compounds are water, ethylene glycol, propylene 1,2-glycol or 1,3-glycol, butylene 1,4-glycol or 1,3-glycol, hexane-1,6-diol, octane-1,8-diol, neopentylglycol, 1,4-hydroxymethylcyclohexane, 2-methyl-1,3-propanediol, glycerol, trimethylolpropane, hexane-1,2,6-triol, butane-1,2,4-triol, trimethylolethane, pentaerythritol, mannitol, sorbitol, methylglycosides, sugars, phenol, isononylphenol, resorcinol, hydroquinone, 1,2,2- or 1,1,2-tris(hydroxyphenyl)ethane, ammonia, methylamine, ethylenediamine, tetra- or hexamethyleneamine, triethanolamine, aniline, phenylenediamine, 2,4- and 2,6-diaminotoluene and polyphenylpolymethylenepolyamines, such as are obtainable by aniline-formaldehyde condensation, or mixtures of two or more thereof.

Likewise suitable for use as the polyol component are polyethers which have been modified by vinyl polymers. Products of this kind are available, for example, by polymerizing styrene or acrylonitrile, or a mixture thereof, in the presence of polyethers.

Polyester polyols having a molecular weight of from about 200 to about 10,000 are likewise suitable as the polyol component. Thus, for example, it is possible to use polyester polyols formed by reacting low molecular weight alcohols, especially ethylene glycol, diethylene glycol, neopentyl glycol, hexanediol, butanediol, propylene glycol, glycerol or trimethylolpropane, with caprolactone. Likewise suitable as polyfunctional alcohols for preparing polyester polyols are 1,4-hydroxymethylcyclohexane, 2-methyl-1,3-propanediol, butane-1,2,4-triol, triethylene glycol, tetraethylene glycol, polyethylene glycol, dipropylene glycol, polypropylene glycol, dibutylene glycol and poly-butylene glycol.

Further suitable polyester polyols are preparable by polycondensation. For instance, difunctional and/or trifunctional alcohols can be condensed with a substoichiometric amount of dicarboxylic acids and/or tricarboxylic acids, or their reactive derivatives, to form polyester polyols. Examples of suitable dicarboxylic acids are adipic acid or succinic acid and their higher homologs having up to 16 carbon atoms, unsaturated dicarboxylic acids such as maleic acid or fumaric acid, and also aromatic dicarboxylic acids, particularly the isomeric phthalic acids, such as phthalic acid, isophthalic acid or terephthalic acid. Examples of suitable tricarboxylic acids are citric acid or trimellitic acid. These acids may be used individually or as mixtures of two or more thereof. Particularly suitable in the context of the invention are polyester polyols formed from at least one of said dicarboxylic acids and glycerol which have a residual OH group content. Particularly suitable alcohols are hexanediol, ethylene glycol, diethylene glycol or neopentyl glycol or mixtures of two or more thereof. Particularly suitable acids are isophthalic acid or adipic acid or their mixture.

Polyester polyols of high molecular weight include, for example, the reaction products of polyfunctional alcohols, preferably difunctional alcohols (together where appropriate with small amounts of trifunctional alcohols) and polyfunctional carboxylic acids, preferably difunctional carboxylic acids. Instead of free polycarboxylic acids use may also be made (if possible) of the corresponding polycarboxylic anhydrides or corresponding polycarboxylic esters with alcohols having preferably 1 to 3 carbon atoms. The polycarboxylic acids may be aliphatic, cycloaliphatic, aromatic or heterocyclic or both. They may where appropriate be substituted, by alkyl groups, alkenyl groups, ether groups or halogens, for example. Examples of suitable polycarboxylic acids include succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, tetrachlorophthalic anhydride, endomethylenetetrahydrophthalic anhydride, glutaric anhydride, maleic acid, maleic anhydride, fumaric acid, dimer fatty acid or trimer fatty acid or mixtures of two or more thereof. Where appropriate, minor amounts of monofunctional fatty acids may be present in the reaction mixture.

The polyesters may where appropriate contain a small fraction of carboxyl end groups. Polyesters obtainable from lactones, ε-caprolactone for example, or hydroxycarboxylic acids, ω-hydroxycaproic acid for example, may likewise be used.

Polyacetals and polyester ether polyols are likewise suitable as the polyol component. By polyacetals are meant compounds obtainable from glycols reacted with aldehydes, for example, diethylene glycol or hexanediol or a mixture thereof condensed with formaldehyde. Polyacetals which can be used in the context of the invention may likewise be obtained by the polymerization of cyclic acetals.

Further suitable polyols include polycarbonates. Polycarbonates can be obtained, for example, by reacting diols, such as propylene glycol, butane-1,4-diol or hexan-1,6-diol, diethylene glycol, triethylene glycol or tetraethylene glycol, or mixtures of two or more thereof, with diaryl carbonates, for example, diphenyl carbonate, or phosgene.

Likewise suitable as the polyol component are polyacrylates which carry OH groups. These polyacrylates are obtainable, for example, by polymerizing ethylenically unsaturated monomers which carry an OH group. Monomers of this kind are obtainable, for example, by esterifying ethylenically unsaturated carboxylic acids and difunctional alcohols, the alcohol generally being present in a slight excess. Examples of ethylenically unsaturated carboxylic acids suitable for this purpose are acrylic acid, methacrylic acid, crotonic acid or maleic acid. Corresponding esters carrying OH groups are, for example, 2-hydroxyethyl acrylate, 2-hydroxyethyl methacrylate, 2-hydroxypropyl acrylate, 2-hydroxypropyl acrylate, 2-hydroxypropyl methacrylate, 3-hydroxypropyl acrylate or 3-hydroxypropylmethacrylate or mixtures of two or more thereof.

In addition to the aforedescribed polyol compounds, polyisocyanates are important building blocks of the polyurethane prepolymers which can be used in Component A of the two component laminating adhesives of the present invention. These include compounds of the general structure O=C=N-X-N=C=O, where X is an aliphatic, alicyclic or aromatic radical, such as an aliphatic or alicyclic radical having from 4 to 18 carbon atoms.

As suitable polyisocyanates mention may be made, for example, of 1,5-naphthylene diisocyanate, 4,4'-diphenylmethane diisocyanate (MDI), hydrogenated MDI (H₁₂MDI), xylylene diisocyanate (XDI), tetramethylxylylene diisocyanate (TMXDI), 4,4'-diphenyldimethylmethane diisocyanate, di- and tetraalkylenediphenylmethane diisocyanate, 4,4'-dibenzyl diisocyanate, 1,3-phenylene diisocyanate, 1,4-phenylene diisocyanate, the isomers of tolylene diisocyanate (TDI), 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), chlorinated and brominated diisocyanates, phosphorus-containing diisocyanates, 4,4'-diisocyanatophenylperfluoroethane, tetramethoxybutane 1,4-diisocyanate, butane 1,4-diisocyanate, hexane 1,6-diisocyanate (HDl), dicyclohexylmethane diisocyanate, cyclohexane 1,4-diisocyanate, ethylene diisocyanate, bisisocyanatoethyl phthalate and also diisocyanates having reactive halogen atoms, such as 1-chloromethylphenyl 2,4-diisocyanate, 1-bromomethylphenyl 2,6-diisocyanate, 3,3-bischloromethyl ether 4,4'-diphenyl diisocyanate.

Sulfur-containing polyisocyanates are obtained, for example, by reacting 2 mol of hexamethylene diisocyanate with 1 mol of thiodiglycol or dihydroxydihexyl sulfide. Further diisocyanates which can be used are, for example, trimethylhexamethylene diisocyanate, 1,4-diisocyanatobutane, 1,12-diiso-cyanatododecane and dimer fatty acid diisocyanate. Particularly suitable are the following: tetramethylene, hexamethylene, undecane, dodecamethylene, 2,2,4-trimethylhexane, 1,3-cyclohexane, 1,4-cyclohexane, 1,3- or 1,4-tetramethylxylene, isophorone, 4,4-dicyclohexylmethane and lysine ester diisocyanates. In one embodiment of the invention, tetramethylxylylene diisocyanate (TMXDI) is utilized as the polyisocyanate.

Examples of suitable isocyanates having a functionality of at least three are the trimerization and oligomerization products of the polyisocyanates already mentioned above, such as are obtainable, with the formation of isocyanurate rings, by appropriate reaction of polyisocyanates, preferably of diisocyanates. Where oligomerization products are used, those particularly suitable have a degree of oligomerization of on average from about 3 to about 5. Isocyanates suitable for the preparation of trimers are the diisocyanates already mentioned above, particular preference being given to the trimerization products of the isocyanates HDI, MDI or IPDI.

Likewise suitable for use are the polymeric isocyanates, such as are obtained, for example, as a residue in the distillation bottoms from the distillation of diisocyanates. Particularly suitable in this context is the polymeric MDI as is obtainable from the distillation residue during the distillation of MDI.
Component B of the two component laminating adhesive used according to the present invention contains at least one compound having two or more active hydrogens per molecule, wherein the active hydrogen functionalized groups are capable of reacting with the isocyanate functional groups in Component A. For example, the polyurethane prepolymers of Component A can be crosslinked or chain-extended with suitable active hydrogen-containing curing agents, generally polyfunctional alcohols or amines, to give substances of higher molecular weight (which can be linear and/or crosslinked in character).

Examples of suitable active hydrogen-functionalized compounds suitable for use in Component B include the substances previously described herein as being suitable for reacting with polyisocyanates to form isocyanate-functionalized polyurethane prepolymers. "Active hydrogen-functionalized" as used herein refers to a functional group containing a hydrogen atom which, because of its position in the compound, displays significant activity according to the Zerewitnoff test described by Wohler in the Journal of the American Chemical Society, Vol. 49, p. 3181 (1927). Suitable active hydrogen-functionalized compounds also include those polymeric substances having about 2 to about 4 functional groups containing active hydrogen which are capable of reacting with isocyanate such as hydroxyl and primary or secondary amino groups. The active hydrogen-functionalized compound may have a number average molecular weight of from about 200 to about 100,000. In another embodiment, the molecular weight is from about 500 to about 50,000. Polyester polyols, polyether polyols, polyether ester polyols and mixtures thereof may be utilized. Examples of polyester polyols are those obtained by reacting dibasic acids such as terephthalatic acid, isophthalic acid, adipic acid, azaelaic acid and sebacic acid, dialkyl esters thereof and mixtures thereof with glycols such as ethylene glycol, propylene glycol, diethylene glycol, butylene glycol, neopentyl glycol, 2-methyl-1, 3- propanediol, 1,6-hexanediol and mixtures thereof. Polycaprolactone polyols may also be used. Exemplary polyether polyols include those obtained by polymerizing oxirane compounds such as ethylene oxide, propylene oxide, butylene oxide, oxirane and tetrahydrofuran using water or low molecular weight polyols such as ethylene glycol, propylene glycol, trimethylol propane or glycerin as an initiator. Copolymers of oxiranes (including random, block, and end-capped copolymers) are also suitable for use.

Examples of polyether ester polyols include those obtained by reacting polyether polyols with dibasic acids such as those mentioned herein above in connection with polyester polyols.
Low molecular weight polyhydroxy compounds having a number average molecular weight of less than 200 may also be used in Component B, either alone or conjointly with the aforementioned higher molecular weight polymeric polyols. Suitable polyhydroxy compounds include ethylene glycol, propylene glycol, butylene glycol, diethylene glycol, dipropylene glycol, hexylene glycol, neopentyl glycol, cyclohexene dimethanol, glycerin and trimethylolpropane.
Specific mention may be made of the following active hydrogen-functionalized compounds suitable for use in Component B:
- saturated and unsaturated glycols such as ethylene glycol or condensates of ethylene glycol, butane-1,3-diol, butane-1,4-diol, 2-butene-1,4-diol, 2-butyne-1,4-diol, propane-1,2-diol, propane-1,3-diol, neopentyl glycol, hexanediol, bishydroxymethylcyclohexane, dioxyethoxyhydroquinone, bis-glycol terephthalate, N,N'-di(2-hydroxyethyl)succinamide, N,N'-dimethyl-N,N'-di(2-hydroxy-ethyl)succinamide, 1,4-di(2-hydroxymethyl-mercapto)-2,3,5,6-tetrachlorobenzene, 2-methylene-propane-1,3-diol, 2-methylpropane-1,3-diol, 3-pyrrolidino-1,2-propanediol, 2-methylenepentane-2,4-diol, 3-alkoxy-1,2-propanediol, 2-ethylhexane-1,3-diol, 2,2-dimethylpropane-1,3-diol, 1,5-pentanediol, 2,5-dimethyl-2,5-hexanediol, 3-phenoxy-1,2-propanediol, 3-benzyloxy-1,2-propanediol, 2,3-dimethyl-2,3-butanediol, 3-(4-methoxyphenoxy)-1,2-propanediol, and hydroxymethylbenzyl alcohol;
- aliphatic, cycloaliphatic, and aromatic diamines such as ethylenediamine, hexamethylenediamine, 1,4-cyclohexylenediamine, piperazine, N-methylpropylenediamine, diaminodiphenyl sulfone, diaminodiphenyl ether, diaminodiphenyldimethyl- methane, 2,4-diamino-6-phenyltriazine, isophoronediamine, dimer fatty acid diamine, diaminodiphenylmethane, aminodiphenylamine or the isomers of phenylenediamine;
- carbohydrazides or hydrazides of dicarboxylic acids;
- amino alcohols such as ethanolamine, propanolamine, butanolamine, N-methylethanolamine, N-methylisopropanolamine, diethanolamine, triethanolamine, and higher di- or tri(alkanolamines);
- aliphatic, cycloaliphatic, aromatic and heterocyclic mono- and diaminocarboxylic acids such as glycine, 1- and 2-alanine, 6-aminocaproic acid, 4-aminobutyric acid, the isomeric mono- and diaminobenzoic acids, and the isomeric mono- and diaminonaphthoic acids.

The amounts of Component A and Component B used in the laminating adhesive systems of this invention will generally be adjusted so as to provide an NCO/active hydrogen equivalent ratio in the range of from about 1 to 10 in one embodiment of the invention, from about 1.05 to about 5 in another embodiment, and from about 1.1 to about 2 in yet another embodiment. Typically, the free isocyanate content (prior to any reaction between Component A and Component B) will be from about 1 % to about 25 % by weight based on the total weight of the two component adhesive.

The microencapsulated catalysts used in the adhesive systems of the present invention are comprised of one or more catalysts encased or encapsulated in a coating which is non-catalytic in character. As mentioned previously, the catalyst is a substance capable of increasing the rate of reaction between the isocyanate functional groups and the functional groups bearing active hydrogen atoms present in the mixture obtained by combining Component A and Component B. However, the catalyst does not itself chemically react with such functional groups and does not become covalently bound to the polyurethane matrix formed upon curing of the mixture of Component A and Component B.

Suitable catalysts include tertiary amines, e.g., triethylamine, 1,4-diazabicyclo[2.2.2]octane (= DABCO), dimethylbenzylamine, bisdimethylaminoethyl ether, dimorpholinodiethyl ether (DMDEE), 1-methylimidazole, 2-methyl-1-vinylimidazole, 1-allylimidazole, 1-phenylimidazole, 1,2,4,5-tetramethylimidazole, 1-(3-aminopropyl)imidazole, pyrimidazole, 4-dimethylaminopyridine, 4-pyrrolidinopyridine, 4-morpholinopyridine, and 4-methylpyridine.

Any of the inorganic compounds and organometallic compounds known in the art as urethane-forming catalysts are useful in the present invention when encapsulated. Organotin compounds are particularly suitable for use as catalysts. These are compounds containing both tin and an organic radical, particularly compounds containing one or more Sn-C bonds. Organotin compounds in the wider sense include, for example, salts such as tin octoate and tin stearate. Tin compounds in the narrower sense include in particular compounds of tetravalent tin of the general formula Rₙ₊₁SnX₃₋ₙ, where n stands for a number from 0 to 2, R stands for an alkyl group or an aryl group or both, and X, finally, stands for an oxygen, sulfur or nitrogen compound or a mixture of two or more thereof. Advantageously, R contains at least 4 carbon atoms, in particular at least 8. X is preferably an oxygen compound, i.e., an organotin oxide, hydroxide, carboxylate or an ester of an inorganic acid. However, X may also be a sulfur compound, i.e., an organotin sulfide, thiolate or a thio acid ester. Among the Sn-S compounds, thioglycolic esters are especially suitable, examples being compounds containing the following radicals:
-S-CH₂-CH₂-CO-O-(CH₂)₁₀-CH₃ or
-S-CH₂-CH₂-CO-O-CH₂-CH(C₂H₅)-CH₂-CH₂-CH₂-CH₃.

A further suitable class of compound is represented by the dialkyltin(IV) carboxylates (X = O-CO-R¹). The carboxylic acids have, in certain embodiments of the invention, at least 2, at least 10, or 14 to 32 carbon atoms. It is also possible for dicarboxylic acids to be used. Examples of suitable acids include adipic acid, maleic acid, fumaric acid, terephthalic acid, phenylacetic acid, benzoic acid, acetic acid, propionic acid, and especially caprylic, capric, lauric, myristic, palmitic, and stearic acids. Particularly suitable are, for example, dibutyltin diacetate and dilaurate and also dioctyltin diacetate and dilaurate.
Additionally, tin oxides, tin sulfides, and also tin thiolates are suitable catalysts in the context of the present invention. Specific illustrative compounds include the following: bis(tributyltin) oxide, dibutyltin didodecylthiolate, dioctyltin dioctylthiolate, dibutyltin bis(2-ethylhexyl thioglycolate), octyltin tris(2-ethylhexyl thioglycol-ate), dioctyltin bis(thioethylene glycol 2-ethylhexoate), dibutyltin bis(thioethylene glycol laurate), dibutyltin sulfide, dioctyltin sulfide, bis(tributyltin) sulfide, dibutyltin bis(2-ethylhexyl thioglycolate), dioctyltin bis(thioethylene glycol 2-ethylhexoate), trioctyltin thioethylene glycol 2-ethylhexoate, and also dioctyltin bis(2-ethylhexyl thiolatoacetate), bis(S,S-methoxycarbonylethyl)tin bis(2-ethylhexylthiolatoacetate), bis(S,S-acetylethyl)tin bis(2-ethylhexyl thiolatoacetate), tin(II) octylthiolate, and tin(II) thioethylene glycol 2-ethylhexoate.
Furthermore, mention may also be made of the following exemplary catalysts: dibutyltin diethylate, dihexyltin dihexylate, dibutyltin diacetylacetonate, dibutyltin diethylacetylacetate, bis(butyldichlorotin) oxide, bis(dibutylchlorotin) sulfide, tin(II) phenolate, tin(II) acetylacetonate, and also other α-dicarbonyl compounds such as acetylacetone, dibenzoylmethane, benzoylacetone, ethyl acetoacetate, n-propyl acetoacetate, ethyl α,α'-diphenylacetoacetate, and dehydroacetoacetic acid. Organosilicon titanates, alkyl titanates, organomercury compounds, organolead compounds, and bismuth carboxylates may also be utilized as catalysts in the present invention.

The catalyst or mixture of catalysts is subjected in a microencapsulation process known to the skilled worker, for example, coacervation, interfacial polymerization, spray drying, immersion or centrifuge methods, multifluid nozzles, fluidized bed, electrostatic microencapsulation, and vacuum encapsulation. The microcapsules (microencapsulated catalyst) may, for example, be prepared by the spray drying process; in principle, all spray drying processes known to the skilled worker are suitable here. In a spray drying process the aqueous solution or dispersion comprising the constituents of the microcapsule are sprayed together with a hot air stream, with the aqueous phase or all the constituents which are volatile in the air stream evaporating.
The microcapsules may have a particle size of from 100 nanometers to 800 micrometers. In another embodiment, the particle size is from 0.1 to 100 micrometers. In yet another embodiment, the microcapsule particle size is from 0.5 to 60 micrometers. In another particular embodiment, the microcapsules have a particle size of from 0.1 to 10 micrometers. In still another embodiment, the particle size of the microcapsules is not greater than 75 micrometers. The size and concentration of the microcapsules are selected such that effective opening of the microcapsules can take place upon application of pressure (accompanied by heating, radiation, and/or other forces) and a sufficient adhesive strength and other properties for the laminate are obtained within the desired, shortened period of curing time. However, the size and concentration of the microcapsules should also be such that the materials which are used for encapsulation and which remain within the adhesive system do not exert any adverse effects on the adhesive and cohesive properties of the laminating adhesive. Further, where the two component adhesive is used to prepare a transparent multilayer laminate, it is desirable to select the composition and concentration of the microencapsulated catalyst so that residues of the coating used to encapsulate the catalyst are not visible to the naked eye once the laminating adhesive is cured.
Materials suitable for encapsulating the catalyst are those which are insoluble at ambient temperatures in the component(s) of the adhesive system with which the microencapsulated catalyst is to be combined. The encapsulation materials may, for example, have a melting or softening point of 40°C to 200°C. Thermoplastic as well as thermoset materials may be used to encapsulate the catalyst or mixture of catalysts. The encapsulation materials may be polymeric in character and/or have film-forming properties. Examples of suitable encapsulation materials are the following: hydrocarbon waxes, wax esters, polyethylene waxes, ethylene/olefin copolymer waxes, oxidized hydrocarbon waxes containing hydroxyl or carboxyl groups, polyesters, polyamides, polyvinyl alcohols, polyacrylates, polyurethanes, ethylene/vinyl acetate copolymers (and hydrolyzed derivatives thereof), epoxy phenolic resins and mixtures of two or more thereof.
The amount of encapsulation material relative to the amount of catalyst is not believed to be critical, except that sufficient encapsulation material should be used such that the catalyst is effectively shielded from contact with the reactive components of the adhesive composition prior to the time that it is desired to catalyze the reaction between the isocyanate-functionalized compound(s) and the active hydrogen-functionalized compound(s). That is, the coating of encapsulation material should be of sufficient thickness and coverage that the catalyst encapsulated therein is at least substantially prevented from interacting on a molecular level with such compounds after such compounds are combined and during processing of the two component adhesive until the catalyst is released from encapsulation by application of pressure and/or other means (e.g., heating). The amount of microencapsulated catalyst is selected as needed to provide the desired degree of cure acceleration in the two component laminating adhesive and will vary, for example, based on the activity of the catalyst, the concentration of catalyst in the microencapsulated catalyst, the reactivities of the isocyanate-functionalized compound(s) and active hydrogen-functionalized compounds, among other factors, but may be readily optimized using conventional experimental methods. The microencapsulated catalyst may, for example, be present within the adhesive in an amount of from 0.01 to 10% by weight (based on the total weight of the two component adhesive). In another embodiment, an amount of the microencapsulated catalyst representing from 0.1 to 2% by weight of the adhesive is present. The amount of active catalyst contained in the microencapsulated catalyst may, for example, be from 0.001 to 2% by weight based on the total weight of the two component adhesive. If desired, other additives or materials may be present in the microencapsulated catalyst in addition to the catalyst(s) and coating (encapsulation) material(s).
Where appropriate, in addition to the microencapsulated catalyst(s), isocyanate-functionalized compound(s), and active hydrogen-functionalized compound(s) previously described, the two component laminating adhesive of the invention may comprise one or more further additives. The additives may, for example, account for up to about 10% by weight of the overall two component adhesive.
The optional additives which can be used in the context of the present invention include solvents, water, non-encapsulated catalysts, plasticizers, stabilizers, antioxidants, light stabilizers, fillers, dyes, pigments, fragrances, preservatives or mixtures thereof.

The film or films to be coated or adhered to each other using the two component formulations according to the present invention may be comprised of any of the materials known in the art to be suitable for use in flexible packaging, including both polymeric and metallic materials as well as paper (including treated or coated paper). Thermoplastics are particularly preferred for use as at least one of the layers. The materials chosen for individual layers in a laminate are selected to achieve specific desired combinations of properties, e.g., mechanical strength, tear resistance, elongation, puncture resistance, flexibility/stiffness, gas and water vapor permeability, oil and grease permeability, heat sealability, adhesiveness, optical properties (e.g., clear, translucent, opaque), formability, merchantability and relative cost. Individual layers may be pure polymers or blends of different polymers. The polymeric layers are often formulated with colorants, anti-slip, antiblock, and anti-static processing aids, plasticizers, lubricants, fillers, stabilizers and the like to enhance certain layer characteristics.

Particularly preferred polymers for use in the present invention include, but not limited to, polyethylene (including low density polyethylene (LDPE), medium density polyethylene (MDPE), high density polyethylene (HPDE), high molecular weight, high density polyethylene (HMW-HDPE), linear low density polyethylene (LLDPE), linear medium density polyethylene (LMPE)), polypropylene (PP), oriented polypropylene, polyesters such as poly (ethylene terephthalate) (PET) and poly (butylene terephthalate) (PBT), ethylene-vinyl acetate copolymers (EVA), ethylene-acrylic acid copolymers (EAA), ethylene-methyl methacrylate copolymers (EMA), ethylene-methacrylic acid salts (ionomers), hydrolyzed ethylene-vinyl acetate copolymers (EVOH), polyamides (nylon), polyvinyl chloride (PVC), poly(vinylidene chloride) copolymers (PVDC), polybutylene, ethylene-propylene copolymers, polycarbonates (PC), polystyrene (PS), styrene copolymers, high impact polystyrene (HIPS), acrylonitrile-butadiene-styrene polymers (ABS), and acrylonitrile copolymers (AN).

The polymer surface may be treated or coated, if so desired. For example, a film of polymer may be metallized by depositing a thin metal vapor such as aluminum onto the film's surface. Metallization may enhance the barrier properties of the finished laminate. The polymer film surface may also be coated with anti-fog additive or the like or subjected to a pretreatment with electrical or corona discharges, or ozone or other chemical agents to increase its adhesive receptivity. One or more layers of the laminate may also comprise a metal foil, such as aluminum foil, or the like. The metal foil will preferably have thickness of about 5 to 100 µm.

The individual films comprising the laminates of the present invention can be prepared in widely varying thicknesses, for example, from about 5 to about 200 microns. The films, foils, and laminating adhesive formulation can be assembled into the laminate by using any one or more of the several conventional procedures known in the art for such purpose. For instance, the adhesive formulation may be applied to the surface of one or both of two films/foils by means of extrusion, brushes, rollers, blades, spraying or the like and the film/foil surfaces bearing the adhesive composition brought together and passed through a set of rollers (often referred to as nip rollers) which press together the film/foils having the adhesive composition between the films/foils. The resulting laminate may be rolled or wound onto a reel. The adhesive containing the microencapsulated catalyst may be applied by conventional techniques; e.g., by either a multi-roll application station if the adhesive system is of the solvent-free type and by a multiroll or by gravure roller if it is a solvent- or water-based adhesive system.

However, care should be taken so that the microcapsule coating protecting the active catalyst is not prematurely damaged during the mixing and application stages but is activated (e.g., ruptured) by the pressure exerted by the rolls after application, e.g., the nip rolls. In addition, heating, ultrasonic waves, microwaves, radiation, or other methods can be used to collapse or open the microcapsules such that the chemical reaction between the isocyanate-functionalized compound(s) and the active hydrogen-functionalized compound(s) is accelerated by making the catalyst available for interaction with these compounds.

Typically, the rate at which the adhesive formulation is applied to the surface of a film or foil is in the range of about 0.2 to about 5 g/m². For example, the two components of adhesive formulation may be pumped from separate drums or tanks at from about room temperature to about 40° C, mixed in the desired ratio using standard methods and equipment (for example, a meter-mix unit) and applied using solventless application machinery having the capability of being heated from about 25° C to about 90° C. The adhesive composition of the present invention is utilized as a two component system wherein the two components are combined shortly before use. It may be desirable to heat the laminate at an elevated temperature (e.g., about 40° C to about 100° C) so as to accelerate full curing of the adhesive composition. Alternatively, the adhesive composition may be adjusted so as to be curable at approximately room temperature (e.g., about 20° C to about 40° C) over a period of from about 1 hour to about 7 days after activation of the microencapsulated catalyst. Radiation may also be used to increase the cure rate of the adhesive. However, an advantage of the present invention is that the curing rate of the adhesive is increased as compared to a comparable two component system that does not contain any microencapsulated catalyst, yet the effective working time is also increased as compared to a comparable two component system that contains an equivalent amount of the same catalyst in unencapsulated form.

Generally speaking, the adhesive compositions used according to the present invention are believed to be largely chemically cured through the reaction of the formulation constituents containing isocyanate groups and the constituents containing hydroxyl or other active hydrogen groups. However, curing can also be accomplished at least in part through moisture curing. Although sufficient moisture may be inherently present on the film or foil surfaces for this purpose, water may also be deliberately introduced through conventional methods if so desired.

Laminates prepared in accordance with the present invention may be used for packaging purposes in the same manner as conventional or known flexible laminated packaging films. The laminates are particularly suitable for forming into flexible pouch-shaped container vessels capable of being filed with a foodstuff and retorted. For example, two rectangular or square sheets of the laminate may be piled in the desired configuration or arrangement; preferably, the two layers of the two sheets which face each other are capable of being heat-sealed to each other. Three peripheral portions of the piled assembly are then heat-sealed to form the pouch. Heat-sealing can easily be accomplished by means of a heating bar, heating knife, heating wire, impulse sealer, ultrasonic sealer, or induction heating sealer.
The foodstuff is thereafter packed in the so-formed pouch. If necessary, gasses injurious to the foodstuff such as air are removed by known means such as vacuum degasification, hot packing, boiling degasification, or steam jetting or vessel deformation. The pouch opening is then sealed using heat. The packed pouch may be charged to a retorting apparatus and sterilized by heating to a temperature greater than about 100°C.

### Examples

Example A : TYCEL 7668 isocyanate-functionalized polyurethane prepolymer (available from the Liofol division of Henkel Corporation) and TYCEL 7276 polyol (also available from Liofol) were mixed at a weight ratio of 2 to 1 and the viscosity of the resulting mixture measured over time. The viscosity / temperature profile is shown below.

| **TIME (min.)** | **40°C (mPas) [cps]** |
|---|---|
| 5 | 2,250 |
| 10 | 2,125 |
| 15 | 2,375 |
| 20 | 2,750 |
| 25 | 3,250 |
| 30 | 3,750 |

Example B : The experiment in Example A was repeated with the addition of 0.5% by weight of dibutyl tin dilaurate to the adhesive mixture. The adhesive mixture gelled immediately and could not be tested further.

Example C: The experiment in Example A was repeated with the addition to the adhesive mixture of 0.5% by weight of microencapsulated dibutyl tin dilaurate supplied by Capsulated Systems Inc. The results are shown below.

| **TIME (min.)** | **40°C (mPas)[cps]** |
|---|---|
| 5 | 2,250 |
| 10 | 2,325 |
| 15 | 2,750 |
| 20 | 3,750 |
| 25 | 4,250 |
| 30 | 4,750 |

### Example 1 (Comparative):

A laminate of 12 µm [48 gauge] polyester film is formed with the adhesive system of example A using a Nordmecanicca solventless laminator and a coat weight of 1.6 grams per square meter.

### Example 2:

Example 1 was repeated with the adhesive system of example C.

### Example 3 (Comparative):

A laminate of 12 µm [48 ga] polyester film is formed using an adhesive system obtained by mixing TYCEL 7900 (a solvent-based polyurethane laminating adhesive sold by the Liofol division of Henkel Corporation) with TYCEL 7283 (a polyol sold by the Liofol division of Henkel Corporation) in a weight ratio of 50 to 1 on a Nordmecanicca solventless laminator with a coat weight of 1.6 grams per square meter.

### Example 4:

Example 3 was repeated with the same adhesive system additionally containing 0.5% by weight of microencapsulated dibutyl tin dilaurate catalyst supplied by Capsulated Systems Inc., Springfield, Ohio

Adhesion at room temperature and heat seals were tested for the laminates made in Examples 1 through 4.

**Table 1 (per ASTM 1876 in 0,45 kg/2,54 cm [lbs / inch])**

| Example | 4 hour RT bonds | 1 day 150 degrees F | 7 day bonds | 7 day Heat Seals |
|---|---|---|---|---|
| 1 | 0.40 peel | 2.97 peel | 1.5 ST | 7.83 ST |
| 2 | 1.1 peel | 4.58 peel | 1.4 ST | 6.94 ST |
| 3 | 0.7 peel | 3.80 peel | 2.0 ST | 7.22 ST |
| 4 | 1.65 peel | 4.30 peel | 2.2 ST | 8.0 ST |

### Example 5:

10.2 cm x 10.2 cm [4 inch x 4 inch] pouches were made from the laminates prepared in Examples 1 through 4 and filled with 3% acetic acid 1, 2, 4 and 14 days after lamination. The pouches were kept in a 70 degree C oven for two hours. After two hours, the contents of the pouch were treated with the following sequence of reagents to convert any migrated diaminodiphenylmethane (derived from unreacted MDI) to the diazonium salt.
1. sodium nitrite (1 % solution) / dilute hydrochloric acid
2. ammonium sulfamate
3. N-(-1-Naphthyl)-ethylenediamine-dihydrochloride 1% solution (coupling agent) The derivatized products were tested in a Shimadzu UV-210 PC spectrophotometer at 550 nm. A calibration curve with known quantities of aniline hydrochloride was developed. The results of the UV measurements are shown in Table 1.

**Table 1 (in parts per billion)**

| Example | Day 1 | Day 2 | Day 4 | Day 14 |
|---|---|---|---|---|
| 1 | 8 ppb | 4 ppb | <2 ppb | <2 ppb |
| 2 | 6 ppb | <2 ppb | <2 ppb | <2 ppb |
| 4 | >28 ppb | >28 ppb | <2 ppb | <2 ppb |
| 3 | >28 ppb | >28 ppb | 8 ppb | <2 ppb |

## Claims

1. A method of making a flexible film laminate, said method comprising a) combining Component A and Component B to form an adhesive mixture containing no solvents, wherein Component A comprises an isocyanate-functionalized polyurethane prepolymer and Component B comprises an active hydrogen-functionalized compound and at least one of either Component A or Component B additionally comprises a microencapsulated catalyst, wherein the catalyst encapsulated therein is capable of accelerating reaction of the isocyanate groups of the isocyanate-functionalized polyurethane prepolymer with the active hydrogen groups of the active hydrogen-functionalized component and is at least substantially isolated from contact with the isocyanate-functionalized compound, b) joining a first flexible film and a second flexible film using the adhesive mixture interposed between the first flexible film and the second flexible film, c) applying sufficient pressure to the adhesive mixture interposed between the first flexible film and the second flexible film to release the catalyst from the microencapsulated catalyst, d) heating the laminate to 20°C to 100°C and e) curing the adhesive mixture.

2. The method of claim 1 wherein the microencapsulated catalyst is a microencapsulated tin catalyst,

3. The method of claim 1 or 2 wherein the microencapsulated catalyst is a microencepsulated dialkyltin dicarboxylate catalyst.

4. The method of claim 1 to 3 wherein Component B comprises a polyol selected from the group consisting of polyether polyols, polyester polyols, polyether ester polyols and mixtures thereof.

5. The method of claim 1 to 4 wherein one flexible films is a metal foil.

6. A laminate manufactured according to a method of claim 1 to 5 wherein the two component laminating adhesive is located between two of said polymeric films and adheres said polymeric films to each other.

7. The laminate of claim 6 wherein at least one polymeric film is comprised of a thermoplastic selected from the group consisting of polyethylene terephthalate, polyethylene, polypropylene, and polyvinylidene chloride.

8. The laminate of claim 7 additionally comprising a metal foil, wherein the polyurethane laminating adhesive is located between the metal foil and at least one polymeric film.

9. The laminate of claim 7 wherein at least one polymeric film is metallized.

## Patentansprüche

1. Verfahren zur Herstellung eines flexiblen Folienlaminats, wobei das Verfahren Folgendes umfasst: a) Kombinieren einer Komponente A und einer Komponente B zur Bildung einer Klebstoffmischung, die keine Lösemittel enthält, wobei die Komponente A ein Isocyanat-funktionalisiertes Polyurethan-Vorpolymer umfasst und die Komponente B eine mit aktivem Wasserstoff funktionalisierte Verbindung umfasst und mindestens eine von der Komponente A oder Komponente B zusätzlich einen mikroverkapselten Katalysator umfasst, wobei der darin verkapselte Katalysator die Reaktion der Isocyanatgruppen des Isocyanat-funktionalisierten Polyurethan-Vorpolymers mit den aktiven Wasserstoffgruppen der mit aktivem Wasserstoff funktionalisierten Komponente beschleunigen kann und zumindest im Wesentlichen von dem Kontakt mit der Isocyanat-funktionalisierten Verbindung isoliert ist; b) Verbinden einer ersten flexiblen Folie und einer zweiten flexiblen Folie unter Verwendung der Klebstoffmischung, die zwischen der ersten flexiblen Folie und der zweiten flexiblen Folie angeordnet ist; c) Aufbringen eines ausreichenden Drucks auf die zwischen der ersten flexiblen Folie und der zweiten flexiblen Folie angeordnete Klebstoffmischung, um den Katalysator von dem mikroverkapselten Katalysator freizusetzen; d) Erhitzen des Laminats auf 20°C bis 100°C; und e) Härten der Klebstoffmischung.

2. Verfahren nach Anspruch 1, wobei der mikroverkapselte Katalysator ein mikroverkapselter Zinnkatalysator ist.

3. Verfahren nach Anspruch 1 oder 2, wobei der mikroverkapselte Katalysator ein mikroverkapselter Dialkylzinndicarboxylat-Katalysator ist.

4. Verfahren nach Anspruch 1 bis 3, wobei die Komponente B ein Polyol umfasst, das aus der Gruppe bestehend aus Polyetherpolyolen, Polyesterpolyolen, Polyetheresterpolyolen und Mischungen davon ausgewählt wird.

5. Verfahren nach Anspruch 1 bis 4, wobei eine flexible Folie eine Metallfolie ist.

6. Laminat, hergestellt nach einem Verfahren nach Anspruch 1 bis 5, wobei der Zweikomponenten-Laminierklebstoff zwischen zwei der Polymerfolien angeordnet ist und die Polymerfolien aneinanderklebt.

7. Laminat nach Anspruch 6, wobei mindestens eine Polymerfolie einen thermoplastischen Kunststoff umfasst, der aus der Gruppe bestehend aus Polyethylenterephthalat, Polyethylen, Polypropylen und Polyvinylidenchlorid ausgewählt wird.

8. Laminat nach Anspruch 7, zusätzlich umfassend eine Metallfolie, wobei der Polyurethan-Laminierklebstoff zwischen der Metallfolie und mindestens einer Polymerfolie angeordnet ist.

9. Laminat nach Anspruch 7, wobei mindestens eine Polymerfolie metallisiert ist.

## Revendications

1. Procédé de fabrication d'un stratifié de film souple, ledit procédé comprenant a) la combinaison d'un composant A et d'un composant B pour former un mélange adhésif ne contenant aucun solvant, dans lequel le composant A comprend un prépolymère d'isocyanate-polyuréthane fonctionnalisé et le composant B comprend un composé fonctionnalisé à l'hydrogène actif et au moins l'un ou l'autre du composant A et du composant B comprend en plus un catalyseur microencapsulé, dans lequel le catalyseur encapsulé dedans est capable d'accélérer la réaction des groupes isocyanate du prépolymère d'isocyanate-polyuréthane fonctionnalisé avec les groupes hydrogène actif du composé fonctionnalisé à l'hydrogène actif et est au moins sensiblement isolé d'un contact avec le composé fonctionnalisé à l'isocyanate, b) la jonction d'un premier film souple et d'un deuxième film souple en utilisant le mélange adhésif interposé entre le premier film souple et le deuxième film souple, c) l'application d'une pression suffisante pour que le mélange adhésif interposé entre le premier film souple et le deuxième film souple libère le catalyseur depuis le catalyseur microencapsulé, d) le chauffage du stratifié à 20°C jusqu'à 100°C et e) le durcissement du mélange adhésif.

2. Procédé selon la revendication 1, dans lequel le catalyseur microencapsulé est un catalyseur d'étain microencapsulé.

3. Procédé selon la revendication 1 ou 2, dans lequel le catalyseur microencapsulé est un catalyseur de dicarboxylate de dialkylétain microencapsulé.

4. Procédé selon la revendication 1 à 3, dans lequel le composant B comprend un polyol choisi dans le groupe constitué par les polyols polyéthers, les polyols polyesters, les polyols polyéther esters et les mélanges de ceux-ci.

5. Procédé selon les revendications 1 à 4, dans lequel un film souple est une feuille métallique.

6. Stratifié fabriqué conformément à un procédé selon les revendications 1 à 5, dans lequel l'adhésif stratifiant les deux composants est localisé entre deux desdits films polymères et fait adhérer lesdits films polymères l'un à l'autre.

7. Stratifié selon la revendication 6, dans lequel au moins un film polymère est composé d'un thermoplastique choisi dans le groupe constitué par le poly(éthylène téréphtalate), le polyéthylène, le polypropylène, et le poly(chlorure de vinylidène).

8. Stratifié selon la revendication 7 comprenant en plus une feuille métallique, dans lequel l'adhésif stratifiant le polyuréthane est localisé entre la feuille métallique et au moins un film polymère.

9. Stratifié selon la revendication 7, dans lequel au moins un film polymère est métallisé.
